# EUROPÄISCHE PATENTSCHRIFT

(11) **EP 1 504 876 B1**
(45) Veröffentlichungstag und Bekanntmachung des Hinweises auf die Patenterteilung: **23.01.2008**
(21) Anmeldenummer: 04102842.4
(22) Anmeldetag: 21.06.2004
(51) Int. Cl.: B29C 47/76

(54) **Entgasungsvorrichtung für Extruder**
Venting apparatus for extruder
Appareil de dégazage pour extrudeuse

(30) Priorität: 06.08.2003 DE 10336372; 07.11.2003 DE 10351973
(43) Veröffentlichungstag der Anmeldung: 09.02.2005
(73) Patentinhaber: Battenfeld Extrusionstechnik GmbH, 32547 Bad Oeynhausen (DE)
(72) Erfinder: Brandt, Rolf, 32257 Bünde (DE); Roth, Michael, 32549 Bad Oeynhausen (DE)

(56) Entgegenhaltungen:
- EP-A- 0 588 008
- WO-A-01/62469
- WO-A-97/31766
- DE-A- 2 304 361

## Beschreibung

Die Erfindung betrifft eine Vorrichtung zum Entgasen von Material, wobei die Vorrichtung aus mindestens einer Zuführeinheit, einer Entgasungseinheit und einer Austragseinheit besteht.

Gattungsgemäße Vorrichtungen sind im Stand der Technik bekannt. Um eine einwandfreie Extrusionsverarbeitung zu gewährleisten ist es erforderlich, daß z.B. der Feuchtigkeitsgehalt des Materials einen bestimmten Wert nicht überschreitet. Bei zu hoher Feuchtigkeit ist entweder das Material zu trocknen oder, was bei den meisten Materialien möglich ist, die Feuchtigkeit durch Vakuumentgasung beim Extrudieren auf das notwendige Minimum zu reduzieren.

So ist beispielsweise in der DE 200 03 297 U1 ein Planetwalzensystem beschrieben, bei dem zwischen einem ersten Planetwalzenextruder und einem zweiten Planetwalzenextruder ein Übergabeteil angeordnet ist. Das Material fällt von dem ersten Planetwalzenextruder durch dieses Übergabeteil in den zweiten Planetwalzenextruder. Das Übergabeteil kann luftdicht abgeschlossen werden und als Fallschacht ausgebildet sein. Am Übergabeteil kann weiterhin ein Vakuum angelegt werden und über eine Absaugung entsprechende Gase dem Material entzogen werden.

Die EP 0 588 008 A1 offenbart einen Mehrwellenextruder, der als Hochleistungs-Entgasungsextruder ausgelegt ist. Hierbei erfolgt die Entgasung in Bereichen, in denen dünne Schmelzeschichten vorherrschen. Der eigentliche Antrieb der mehreren Schnecken erfolgt mittels eines Planetengetriebes.

Eine weitere Möglichkeit der Entgasung ist das Anbringen einer entsprechenden Vorrichtung zwischen zwei Planetwalzenteilen.

Unter Entgasung ist dabei die unter mehr oder weniger starken Vakuum praktizierte Absaugung von Wasser bzw. Wasserdampf oder von Rezepturbestandteilen, wie zum Beispiel Weichmachern oder anderen gewünschten oder ungewünschten Bestandteilen der durch den Planetwalzenextruder geforderten und aufbereiteten Materialien zu verstehen. Neben Kunststoffmassen können dies verschiedene Mischungen sein, die in der Lebensmitteltechnik, chem. Industrie, Klebstoffherstellung etc. Verwendung finden und mit Hilfe des Planetwalzenextruders aufbereitet werden können.

Die Entgasung am Ende des Walzenteils wird bei sog. EV-Maschinen und Kaskadenmaschinen angewendet. Bei der EV-Maschine ist die am Walzenteil angeflanschte Einschnecke entsprechend geometrisch gestaltet, um das Anlegen eines Vakuums zu ermöglichen. Bei Kaskadenextrudem findet die Entgasung im sog. Übergabekasten, als Verbindungskasten der beiden Stufen, statt.

Die Entgasung im Walzenteil ist bisher zwischen zwei Walzenteilen im Bereich der sog. Anlauf- oder Dispergierringe angelegt. Dabei wird das Vakuum über Öffnungen im Anlauf- oder Dispergierring in das Walzenteil geleitet.

Eine ideale Entgasung ist gegeben, wenn folgende Bedingungen eingehalten werden:
a.) die Oberflächen des zu entgasenden Stoffes möglichst groß gehalten werden,
b.) die Oberflächen des zu entgasenden Stoffes regelmäßig erneuert werden,
c.) ein niedriger absoluter Druck herrscht,
d.) große Querschnitte in den Förderleitungen vorhanden sind, um große Mengen des Gases vom entgasten Stoff wegzufördern.

Die bisher bekannten Systeme erfüllen die oben genannten Bedingungen nicht vollständig. In einem Kaskadenextruder und in einer EV-Maschine werden nur die Bedingungen a.), c.) und d.) erfüllt, wobei bei der Entgasung zwischen den Walzenteilen die Bedingung b) nicht eingehalten werden kann. Somit kann bei den bekannten Systemen eine ideale Entgasung nicht durchgeführt werden.

**Aufgabe** der Erfindung ist es, ein bekanntes System derart abzuändern, daß alle genannten Bedingungen a) bis d) für eine ideale Entgasung vorherrschen.

Die **Lösung** der Aufgabe wird in Verbindung mit dem Oberbegriff des Anspruchs 1 dadurch erreicht, daß die Entgasungseinheit ein Walzenteil eines Planetwalzenextruders ist.

Durch diese Verbesserung wird es ermöglicht, einen großen Querschnitt zu schaffen, in dem ein niedriger absoluter Druck herrscht und eine möglichst große Oberfläche des zu entgasenden Stoffes bereitsteht. Bei einem Planetwalzenextruder wird beispielsweise durch die drehenden Spindeln auch der Punkt b) erfüllt, nämlich, daß die Oberfläche des zu entgasenden Stoffes regelmäßig erneuert wird. Die Aussparung kann sich bis zur Mittellinie eines Walzenteils erstrecken, d.h. auf 180° geöffnet sein. Praktische Versuche haben gezeigt, daß ein Öffnungswinkel von 90° sinnvoll ist. Es ist aber auch denkbar, einen Winkel zwischen 10° und 180° zu wählen.

Vorteilhafterweise beträgt die Länge der Aussparung 80% der Länge des entsprechenden Walzenteiles eines Planetwalzenextruders, wobei aber 150 mm des jeweiligen Teilbereiches der Walzenzylinderlänge zur Führung der Planetwalzenspindel zur Verfügung stehen sollten.

Somit könnte beispielsweise ein 500 mm langes Walzenteilsegment über eine Länge von 300 mm geöffnet werden. Vorteilhafterweise liegt diese Öffnung im oberen Bereich des Walzenteiles. In dem Bereich, in dem das Walzenteil nicht ausgespart ist, namentlich den verbleibenden 20%, werden die Verzahnungspartner in bekannter Weise aus Hauptspindel, Planetspindeln und Walzenzylinder zum sogenannten Sonnenradsystem gebildet. Die Planetspindeln sind somit in Ein- und Auslaufbereich über den kompletten Umfang des Sonnenrades gelagert.

Wie bei herkömmlichen Planetwalzenextrudern ist beim vorgeschlagenen Entgasungsextruder die Hauptspindel angetrieben und die Planetspindeln befinden sich in einer Rotationsbewegung und sind zusätzlich im Umlauf um die Hauptspindel. Beim Entgasungsextruder auf Basis des Planetwalzenextruders wird der Teil der Maschine, der zur Entgasung genutzt wird, teilgefüllt gefahren. Die Teilfüllung kann dabei über Unterdosierung, günstige Bestückung mit Planetspindeln oder Variation der Planetspindeln selbst erfolgen, wobei hier insbesondere die Modifizierung der Planetspindelgeometrie über sog. Einstiche in den verschiedenen Ausführungen angesprochen wird. Vor- und nachgeschaltete Abschnitte des Extruders werden gefüllt ausgelegt, was durch entsprechende Bestückung mit Planetspindeln erfolgen kann und/oder es erfolgt der Vakuumabschluß von einem Walzenteilabschnitt zum nächsten über die ausreichende Dimensionierung von vor- und nachgeschalteten Anlauf- oder Dispergierringen. Das Vakuum selbst greift in einem Walzenteilabschnitt an und nutzt die enorme Oberflächenemeuerung, die bekannterweise in einem Planetwalzenextruder stattfindet.

Der geöffnete Teil des Walzenteils wird mit einer ausreichend dimensionierten Vakuumkammer oder Vakuumdom versehen. Dadurch entsteht ein enorm großer Querschnitt zum Abtransport von Gasen und flüchtigen Bestandteilen.

Bedingt durch die angebrachte Aussparung im Walzenteil werden die schraubenförmig am Umfang des Walzenzylinders angeordneten Temperierungskanäle unterbrochen. Um eine ordnungsgemäße Temperierung sicherzustellen werden in diesem Bereich die Temperierkanäle mit Temperierkanalbrücken verbunden, damit das Temperiermedium weiterhin kontinuierlich durch den Walzenzylinder geführt werden kann.

In den Zeichnungen ist schematisch die Vorrichtung wiedergegeben
- Fig. 1: zeigt eine aufgeschnittene Entgasungseinheit mit einem Vakuumentgasungsdom und
- Fig. 2: stellt diesen Teil der Entgasungseinheit in einem Querschnitt dar.

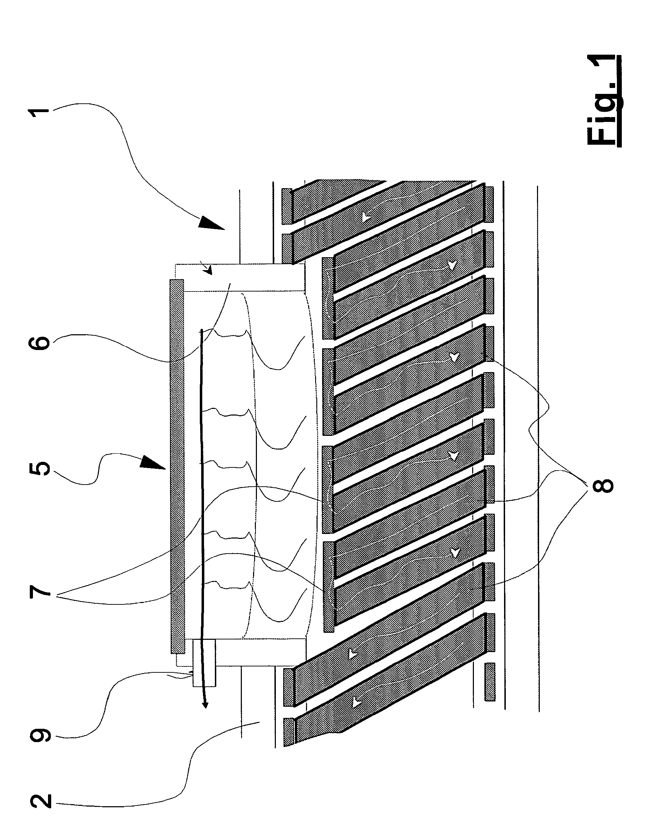

Figur 1 zeigt einen Teilbereich einer aufgeschnittenen Entgasungseinheit, wobei hier ein Walzenteil 1 eines Planetwalzenextruders gewählt wurde und folglich der Walzenzylinder 2 und die Temperierkanälen 8 zu sehen sind. Der obere Bereich des Walzenzylinders 2 ist partiell aufgeschnitten und weist eine Aussparung 5 auf. In dieser Aussparung 5 ist ein Entgasungsdom 6 angeordnet, der einen Vakuumanschluß 9 aufweist. Um eine ordnungsgemäße Temperierung sicherzustellen, sind benachbarte Temperierkanäle mit Temperierkanalbrücken verbunden.

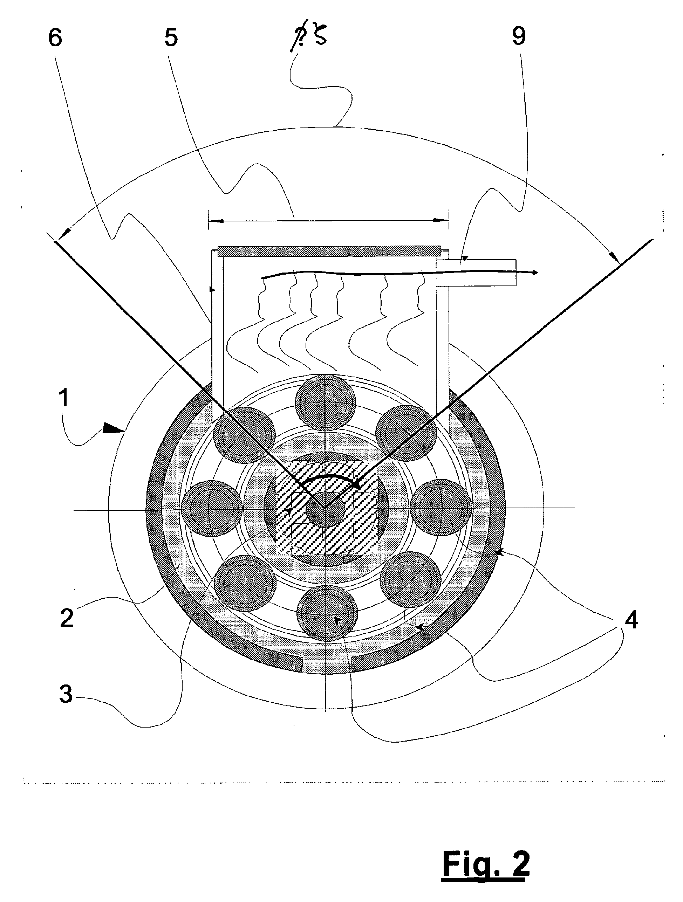

Die schematische Darstellung gemäß Figur 2 verdeutlicht den beschriebenen Öffnungswinkel ζ. In dieser Querschnittsdarstellung eines Walzenteiles 1 ist wiederum der Walzenzylinder 2 zu sehen, in dem die Hauptspindel 3 und die Planetspindeln 4 ein Sonnenradsystem bilden. Die Aussparung 5 im Walzenteil 1, die sich in axiale Richtung erstreckt, beträgt hier 90°. Dieser Winkel wird um die Extrusionsachse bestimmt und von Anfang bis Ende der Öffnung im Walzenzylinder 2 gemessen.

In der Aussparung 5 ist ein Entgasungsdom 6 angeordnet. Der Entgasungsdom 6 weist ein Vakuumanschluß 9 auf, der, wie hier gezeigt, auch um 90° versetzt zu der Darstellung gem. Figur 1 angeordnet sein kann.

Die beschriebene und in den Figuren dargestellte Verbesserung eines bekannten Planetwalzensystems erfüllt alle Bedingungen einer idealen Entgasung.

### Bezugszeichenliste:

- 1: Walzenteil
- 2: Walzenzylinder
- 3: Hauptspindel
- 4: Planetspindel
- 5: Aussparung im Walzenzylinder 2
- 6: Entgasungsdom
- 7: Temperierkanalbrücke
- 8: Temperierkanal
- 9: Vakuumanschluß

- ζ: Öffnungswinkel

## Patentansprüche

1. Vorrichtung zum Entgasen von Material, wobei die Vorrichtung aus mindestens einer Zuführeinheit, einer Entgasungseinheit und einer Austragseinheit besteht, wobei die Entgasungseinheit entlang des Umfanges eine sich in axiale Richtung erstreckende Aussparung (5) aufweist, an der ein Entgasungsdom (6) angeordnet ist, an dem ein Vakuum anlegbar ist
**dadurch gekennzeichnet, dass**
die Entgasungseinheit ein Walzenteil (1) eines Planetwalzenextruders ist.

2. Vorrichtung nach Anspruch 1, wobei der Öffnungswinkel (ζ) zwischen 10° und 180°, vorzugsweise 90° beträgt.

3. Vorrichtung nach Anspruch 1, wobei die Länge der Aussparung (5) 80% der Länge der Entgasungseinheit beträgt.

4. Vorrichtung nach Anspruch 1, wobei die Aussparung (5) im oberen Bereich der Entgasungseinheit angebracht ist.

5. Vorrichtung nach einem der Ansprüche 1 bis 4, **dadurch gekennzeichnet, dass** im nicht ausgesparten Bereich des Walzenteils (1) die Hauptspindel (3), die Planetwalzen (4) und der Walzenzylinder (2) ein Sonnenradsystem bilden.

6. Vorrichtung nach Anspruch 5, wobei im Bereich der Aussparung (5) Temperierkanalbrücken (7) angeordnet sind.

## Claims

1. Device for degassing material, wherein the device consists of at least one supply unit, a degassing unit and a discharge unit, wherein the degassing unit has along the periphery a recess (5) extending in axial direction, in which a degassing dome (6) is arranged, to which a vacuum can be applied, **characterised in that** the degassing unit is a roller part (1) of a planetary gear extruder.

2. Device according to claim 1, wherein the opening angle (ζ) is between 10° and 180°, preferably 90°.

3. Device according to claim 1, wherein the length of the recess (5) is 80% of the length of the degassing unit.

4. Device according to claim 1, wherein the recess (5) is attached in the upper region of the degassing unit.

5. Device according to one of claims 1 to 4, **characterised in that** in the non-recessed region of the roller part (1), the main spindle (3), the planetary gear (4) and the roller cylinder (2) form a sun-wheel system.

6. Device according to claim 5, wherein heating tunnel bridges (7) are arranged in the region of the recess (5).

## Revendications

1. Dispositif pour le dégazage d'un matériau, le dispositif étant constitué d'au moins une unité d'alimentation, une unité de dégazage et une unité d'extraction, dans lequel l'unité de dégazage présente sur sa périphérie un évidement (5) s'étendant dans la direction axiale, sur lequel est aménagé un dôme de dégazage (6) auquel on peut appliquer un vide,
**caractérisé en ce que** l'unité de dégazage est une partie de cylindre (1) d'une extrudeuse à cylindres planétaires.

2. Dispositif selon la revendication 1, dans lequel l'angle d'ouverture (ζ) se situe entre 10 ° et 180 ° et vaut, de préférence, 90 °.

3. Dispositif selon la revendication 1, dans lequel la longueur de l'évidement (5) représente 80 % de la longueur de l'unité de dégazage.

4. Dispositif selon la revendication 1, dans lequel l'évidement (5) est ménagé dans la zone supérieure de l'unité de dégazage.

5. Dispositif selon l'une quelconque des revendications 1 à 4, **caractérisé en ce que**, dans la zone de la partie de cylindre (1) qui n'est pas évidée, la broche principale (3), les cylindres planétaires (4) et le cylindre primitif forment un système solaire.

6. Dispositif selon la revendication 5, dans lequel on a ménagé, dans la zone de l'évidement (5), des ponts de canaux à température équilibrée.
